# DEMANDE DE BREVET EUROPEEN

(11) **EP 1 380 863 A1**
(43) Date de publication de la demande: **14.01.2004**
(21) Numéro de dépôt: 03291412.9
(22) Date de dépôt: 13.06.2003
(51) Int. Cl.: G02B 6/22

(54) **Filtre optique basé sur une fibre optique avec réseau de Bragg incliné**

(30) Priorité: 08.07.2002 FR 0208544
(71) Demandeur: ALCATEL, 75008 Paris (FR)
(72) Inventeur: De Barros, Carlos, 92100 Boulogne-Billancourt (FR); Provost, Lionel, 91460 Marcoussis (FR); Molina, Marianne, 75014 Paris (FR); Riant, Isabelle, 91400 Orsay (FR); Gasca, Laurent, 91140 Villebon sur Yvette (FR)
(74) Mandataire: Lamoureux, Bernard

(57) **Abrégé**

Filtre optique composé d'un réseau de Bragg en angle inscrit dans une portion de fibre optique comprenant un coeur ayant un indice de réfraction n₁ et un rayon R_{coeur} et une gaine ayant un indice de réfraction moyen n₂ inférieur à n₁ et un rayon R_{gaine}, le coeur et la gaine de la fibre étant dopés avec un dopant photosensible sur la portion de fibre comprenant le réseau de Bragg, caractérisé en ce que, dans la portion de fibre comprenant le réseau de Bragg, la photosensibilité de la gaine est supérieure à la photosensibilité du coeur, et la gaine présente une zone de saut d'indice ayant un indice de réfraction n₃ supérieur à n₂ et inférieur à n₁, ladite zone de saut d'indice présentant une largeur L délimitée par un rayon interne R_{S1} supérieur ou égal au rayon du coeur R_{coeur} et un rayon externe R_{S2} inférieur ou égal au rayon de la gaine R_{gaine}.

## Description

La présente invention concerne le domaine des filtres optiques et plus particulièrement des filtres dissipatifs tels que des égaliseurs de gain.

Les filtres égaliseurs de gain, connus également sous l'acronyme de GFF pour Gain Flattening Filter en anglais, sont généralement associés à des amplificateurs optiques disposés dans des répéteurs optiques répartis régulièrement le long de lignes de transmission. Les amplificateurs optiques ne fournissent généralement pas une amplification égale pour toutes les longueurs d'onde des signaux transmis sur les différents canaux d'une même ligne de transmission. En particulier, avec le développement des applications de transmission dense par multiplexage en longueur d'onde (DWDM, pour Dense Wavelength Division Multiplexing), les disparités d'amplification sur une bande passante donnée ont tendances à s'accentuer. Il est donc devenu nécessaire de réaliser des filtres égaliseurs de gain présentant de forts contrastes sur des bandes spectrales étroites pour s'adapter parfaitement à la courbe de gain des amplificateurs en ligne, généralement des amplificateurs à fibre dopée.

Les filtres égaliseurs sont constitués en général par des réseaux de Bragg photo inscrits dans des fibres optiques. Une fibre optique est classiquement composée d'un coeur, ayant pour fonction de transmettre et éventuellement d'amplifier un signal optique, entouré par au moins une couche de gaine optique, ayant pour fonction de confiner le signal optique dans le coeur. A cet effet, les indices de réfraction du coeur n₁ et de la gaine n₂ sont tels que n₁>n₂. Comme cela est bien connu, la propagation d'un signal optique dans une fibre se décompose en un mode fondamental dans le coeur et en des modes secondaires dans la gaine.

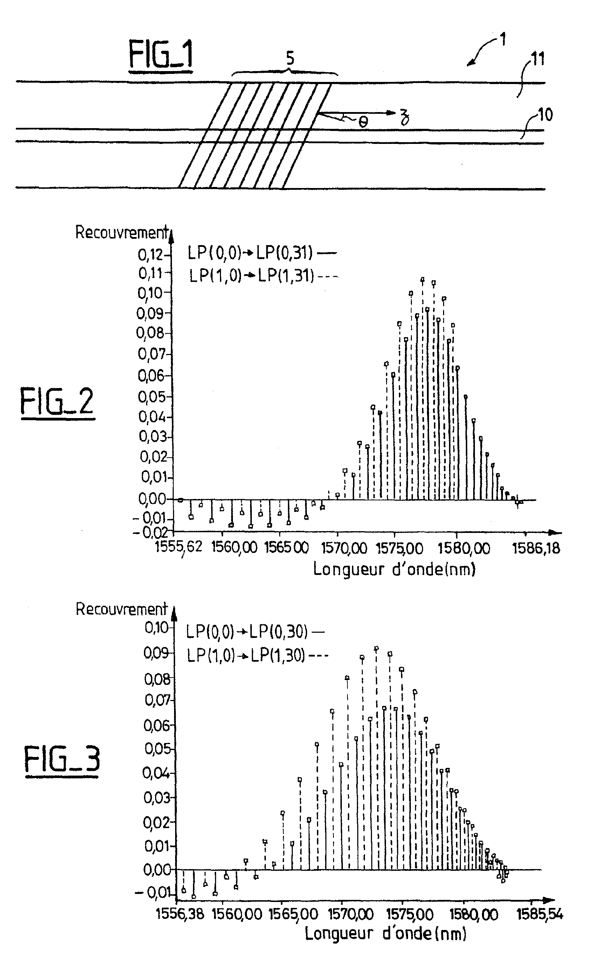

Le coeur et/ou la gaine de la fibre peuvent être dopées de manière à être rendus photosensibles pour une inscription de réseau de Bragg, par exemple avec du germanium (Ge). Les réseaux classiquement utilisés pour des égalisations de gain sont des réseaux en angle, connu sous le terme de SBG pour Slanted Bragg Grating en anglais, dont une illustration est donnée sur la figure 1. Un tel réseau 5 est composé de modulations d'indice de réfraction dans le coeur 10 et/ou la gaine 11 d'une portion de fibre 1. L'angle d'inscription du réseau θ est défini par l'inclinaison de la modulation d'indice photo-inscrite par rapport à l'axe de propagation z du signal optique et doit être choisi pour permettre un couplage du mode fondamental dans les modes de gaine.

La figure 2 illustre la réponse spectrale d'un filtre élémentaire classique tel que schématisé sur la figure 1. Les paramètres influant sur la réponse spectrale d'un tel filtre SBG sont, entre autre, l'angle d'inscription et le saut d'indice entre le coeur et la gaine de la fibre, dans l'exemple illustré θ=3.6° et Δnₒₑᵤᵣ = n₁-n₂=0.004.

Les applications DWDM nécessitent la réalisation de filtres de plus en plus étroits présentant des contrastes de plus en plus accentués.

Dans le cas d'un SBG, la meilleure solution pour réduire la largeur spectrale du filtre tout en diminuant la réflexion (due au couplage du mode fondamental sur lui-même en contra-propagatif) est d'améliorer le couplage entre le mode fondamental et les modes de gaine, et pour ce faire d'augmenter substantiellement l'intégrale de recouvrement entre ces modes. On définit l'intégrale de recouvrement comme l'aire délimitée par le mode fondamental et les modes de gaine pondérée par le profil de photosensibilité de la fibre.

Plusieurs techniques ont déjà été proposées dans l'art antérieur pour augmenter l'aire de recouvrement un niveau d'un filtre photo inscrit dans une portion de fibre.

Une première solution connue consiste à augmenter le diamètre du coeur ou à diminuer le saut d'indice entre le coeur et la gaine Δnₒₑᵤᵣ afin d'élargir le mode fondamental et d'augmenter ainsi le recouvrement. Mais cette solution est limitée par la perte du caractère monomode de la propagation du signal lorsque le diamètre du coeur devient trop grand ou par des problèmes de couplage avec les autres composants optiques du module.

Une deuxième solution connue consiste à rendre la gaine photosensible en plus du coeur pour augmenter la pondération de l'aire de recouvrement. Mais cette solution implique une inscription du réseau de Bragg avec un grand angle (au moins 6° d'inclinaison) afin d'éviter un couplage du mode fondamental sur lui-même et donc une réflexion totale du signal.

Par exemple, la demande de brevet WO 99/27401 décrit un filtre optique composé d'un réseau en angle inscrit dans une portion de fibre présentant une gaine enterrée, c'est à dire une portion de gaine dont l'indice est inférieur à celui de la silice, la gaine étant en outre au moins partiellement photosensible d'une fraction de la photosensibilité du coeur.

Une autre solution pour réduire la largeur spectrale d'un filtre SBG est de diminuer l'angle d'inscription du réseau. Néanmoins, cette solution est rapidement limitée à l'angle minimal requis pour garantir la non-réflexion du signal optique et permettre de s'affranchir des isolateurs optiques indispensables dans les cas de filtres à réseaux de Bragg droits (connu sous le terme de zero-back-reflection angle, en terminologie anglo-saxonne).

En outre, à la recherche d'un filtre présentant une largeur spectrale réduite, s'ajoute le problème de la tolérance du composant aux pertes en courbure. En effet, pour répondre à la miniaturisation des composants, les modules optiques sont de plus en plus compacts et les portions de fibres disposées dans de tels modules sont généralement enroulées ou lovées, afin d'occuper un espace réduit. Un filtre photo-inscrit dans une portion de fibre destinée à être disposée dans un module optique doit donc présenter une certaine tolérance aux pertes en courbures.

Une solution classique pour réduire les pertes en courbure dans une fibre est d'augmenter la différence d'indice entre le coeur et la gaine, soit d'augmenter le saut d'indice Δn_{coeur}= n₁-n₂.

Cependant, cette augmentation du saut d'indice a pour conséquence de confiner davantage le mode fondamental dans le coeur, ce qui nécessite alors d'augmenter l'angle d'inscription afin de conserver un filtre non-réflecteur. Or, l'augmentation de l'angle d'inscription du réseau entraîne un élargissement de la réponse spectrale du filtre. La figure 3 illustre ce problème en représentant la réponse spectrale d'un filtre élémentaire SBG inscrit dans une fibre présentant un saut d'indice accentué Δn_{coeur} =0.0055 avec un angle d'inscription de θ=5°. En comparant les figures 2 et 3, on constate que la réponse spectrale du filtre a été élargie au détriment d'une réduction des pertes en courbure.

Une solution possible pour diminuer l'angle d'inscription d'un SBG tout en maintenant un saut d'indice important est décrite dans la publication « Ultra narrow band optical fibre sidetap filter » par M.J. Holmes et al, ECOC'98. Une telle solution consiste à rendre la gaine photosensible et à diminuer la photosensibilité du coeur, allant même jusqu'à une photosensibilité nulle dans le coeur.

Cette solution permet d'éviter un couplage du mode fondamental sur lui-même pour des réseaux d'angles plus faibles. Cependant, le coeur étant moins photosensible, le recouvrement et donc le couplage du mode fondamental avec les modes de gaine s'en trouve fortement diminué. En outre, l'angle d'inscription pour garantir la non-réflexion dépend de la différence de photosensibilité coeur-gaine et de la largeur du mode et n'est pas facile à reproduire.

L'objet de la présente invention est de résoudre ce double problème de limiter les pertes en courbure et de fournir une réponse spectrale étroite, pour un même filtre. L'objectif de l'invention est alors de proposer un filtre optique dans une fibre optique qui permette d'atteindre un fort contraste sur une bande passante étroite avec des pertes en courbure réduites afin de correspondre au plus proche à la courbe de gain d'un amplificateur donné.

A cet effet, l'invention propose d'inscrire un réseau de Bragg en angle dans une portion de fibre qui présente un profil de photosensibilité combiné à un profil d'indice de réfraction tels que le couplage du mode fondamental sur les modes de gaine soit important tout en minimisant les pertes en courbure au niveau dudit réseau.

En particulier, le saut d'indice entre le coeur et la gaine est maintenu, la gaine présente un saut d'indice et la photosensibilité de la gaine est supérieure à celle du coeur.

Plus particulièrement, la présente invention se rapporte à un filtre optique composé d'un réseau de Bragg en angle inscrit dans une portion de fibre optique comprenant un coeur ayant un indice de réfraction n₁ et un rayon R_{coeur} et une gaine ayant un indice de réfraction moyen n₂ inférieur à n₁ et un rayon R_{gaine}, le coeur et la gaine de la fibre étant dopés avec un dopant photosensible sur la portion de fibre comprenant le réseau de Bragg, caractérisé en ce que, dans la portion de fibre comprenant le réseau de Bragg, la photosensibilité de la gaine est supérieure à la photosensibilité du coeur, et la gaine présente une zone de saut d'indice ayant un indice de réfraction n₃ supérieur à n₂ et inférieur à n₁, ladite zone de saut d'indice présentant une largeur L délimitée par un rayon interne R_{S1} supérieur ou égal au rayon du coeur R_{coeur} et un rayon externe R_{S2} inférieur ou égal au rayon de la gaine R_{gaine}.

Préférentiellement, la différence d'indice entre le coeur et la gaine (Δn_{coeur}=n₁-n₂) est comprise entre 0.003 et 0.006 et la différence d'indice entre la gaine et la zone de saut d'indice (Δnₛₐᵤₜ=n₃-n₂) est comprise entre 0.0004 et 0.001.

Selon les modes de mise en oeuvre, la largeur (L=R_{S2}-R_{S1}) de la zone de saut d'indice est comprise entre 4 et 20 µm, et le rayon interne R_{S1} de la zone de saut d'indice de la gaine est compris entre le rayon du coeur de la fibre R_{coeur} et R_{coeur} + 10µm.

L'invention trouve une application pour des égaliseurs de gain optique comportant au moins un filtre selon l'invention.

Les particularités et avantages de la présente invention apparaîtront plus clairement à la lecture de la description qui suit, donnée à titre d'exemple illustratif et non limitatif, et faite en référence aux figures annexées dans lesquelles :
- la figure 1, déjà décrite, est un schéma d'un réseau en angle inscrit dans une portion de fibre ;
- la figure 2, déjà décrite, illustre la réponse spectrale d'un filtre inscrit dans une fibre classique ;
- la figure 3, déjà décrite, illustre la réponse spectrale d'un filtre inscrit dans une fibre à saut d'indice accentué ;
- la figure 4 illustre schématiquement le profil d'indice d'une portion de guide comportant un filtre selon l'invention ;
- la figure 5 illustre schématiquement le profil de photosensibilité d'une portion de fibre comportant un filtre selon l'invention ;
- la figure 6 illustre schématiquement un exemple de profil d'indice d'une portion de fibre comportant un filtre selon l'invention ;
- la figure 7 illustre la réponse spectrale d'un filtre selon la figure 6.

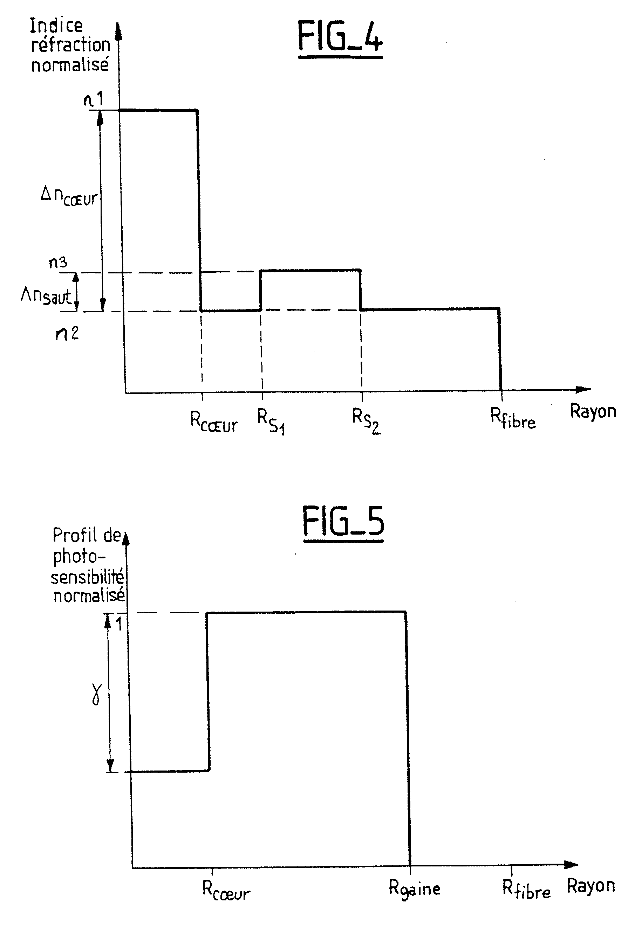

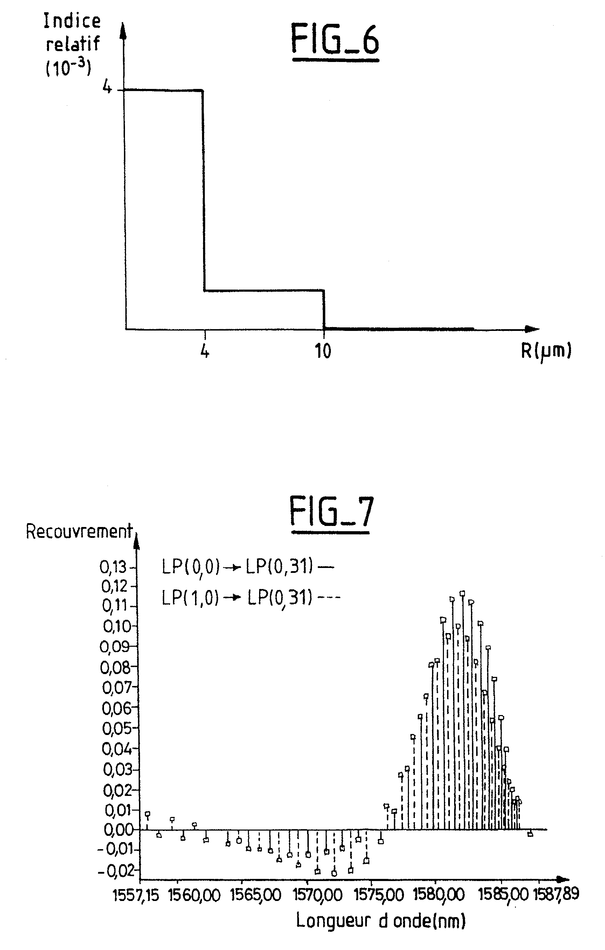

Selon l'invention, un filtre est réalisé par une inscription d'un réseau de Bragg en angle dans une portion de fibre présentant un profil d'indice (figure 4) associé à un profil de photosensibilité (figure 5) adaptés. La fibre comporte un coeur d'indice n₁ et de rayon R_{coeur} entouré d'une gaine d'indice n₂ et de rayon R_{gaine}.

En particulier, selon l'invention, le profil d'indice présente un saut d'indice entre le coeur et la gaine Δn_{coeur} et un saut d'indice dans une portion de la gaine Δnₛₐᵤₜ. Un tel profil d'indice permet de garantir un bon guidage du signal, même en courbure. Avantageusement, le saut d'indice entre le coeur et la gaine de la fibre Δn_{coeur} est compris entre 0.003 et 0.006 et le saut d'indice dans la gaine Δnₛₐᵤₜ est compris entre 0.0004 et 0.001.

Le saut d'indice de la gaine Δnₛₐᵤₜ est situé dans une zone délimitée par deux rayons R_{S1} et R_{S2} de la fibre. Avantageusement la largeur L de cette zone de saut d'indice (L=R_{S2}-R_{S1}) est comprise entre 4 et 20 µm pour une fibre dite classique avec un rayon de coeur R_{coeur}=4 µm, et le rayon interne R_{S1} de la zone de saut d'indice de la gaine est compris entre le rayon du coeur de la fibre R_{coeur} et R_{coeur}+10µm.

En outre, dans la portion de fibre présentant un tel profil d'indice, la photosensibilité de la gaine est supérieure à celle du coeur, afin de permettre une inscription d'un réseau avec un angle réduit. Le rapport de photosensibilité γ entre le coeur et la gaine (γ=Photosensibilité coeur / photosensibilité gaine) est compris entre 0 et 1.

La figure 6 est un exemple de profil d'indice d'une portion de fibre incluant un filtre selon l'invention. Une fibre ayant un rayon de coeur de R_{coeur}=4µm et une différence d'indice entre le coeur et la gaine Δn_{coeur}=0.004 présente un saut d'indice dans la gaine de Δnₛₐᵤₜ=0.0007 avec R_{S1}=R_{coeur} et R_{S2}=10µm. Un tel profil de fibre permet d'élargir le mode fondamental sans modifier le diamètre du coeur.

La figure 7 illustre que la réponse spectrale d'un filtre inscrit dans une telle portion de fibre est affinée par comparaison aux réponses spectrales illustrées aux figures 2 et 3.

En outre, les pertes en courbure sur une telle portion de fibre sont limitées. En effet, pour un rayon de courbure de 30mm, les pertes sont de 0.02 dB à 1550nm contre 0.24 dB pour une même fibre sans saut d'indice dans la gaine.

## Revendications

1. Filtre optique composé d'un réseau de Bragg en angle inscrit dans une portion de fibre optique comprenant un coeur ayant un indice de réfraction n₁ et un rayon R_{coeur} et une gaine ayant un indice de réfraction moyen n₂ inférieur à n₁ et un rayon R_{gaine}, le coeur et la gaine de la fibre étant dopés avec un dopant photosensible sur la portion de fibre comprenant le réseau de Bragg, **caractérisé en ce que**, dans la portion de fibre comprenant le réseau de Bragg, la photosensibilité de la gaine est supérieure à la photosensibilité du coeur, et la gaine présente une zone de saut d'indice ayant un indice de réfraction n₃ supérieur à n₂ et inférieur à n₁, ladite zone de saut d'indice présentant une largeur L délimitée par un rayon interne R_{S1} supérieur ou égal au rayon du coeur R_{coeur} et un rayon externe R_{S2} inférieur ou égal au rayon de la gaine R_{gaine}.

2. Filtre optique selon la revendication 1, **caractérisé en ce que** la différence d'indice entre le coeur et la gaine (Δn_{coeur} = n₁-n₂) est comprise entre 0.003 et 0.006.

3. Filtre optique selon la revendication 1, **caractérisé en ce que** la différence d'indice entre la gaine et la zone de saut d'indice (Δnₛₐᵤₜ = n₃- n₂) est comprise entre 0.0004 et 0.001.

4. Filtre optique selon l'une des revendications 1 à 3, **caractérisé en ce que** la largeur (L=R_{S2}-R_{S1}) de la zone de saut d'indice est comprise entre 4 et 20 µm.

5. Filtre optique selon l'une des revendications 1 à 4, **caractérisé en ce que** le rayon interne R_{S1} de la zone de saut d'indice de la gaine est compris entre le rayon du coeur de la fibre R_{coeur} et R_{coeur}+ 10µm.

6. Egaliseur de gain optique comportant au moins un filtre selon l'une quelconque des revendications précédentes.
